# FASCICULE DE BREVET EUROPEEN

(11) **EP 3 219 997 B1**
(45) Date de publication et mention de la délivrance du brevet: **08.08.2018**
(21) Numéro de dépôt: 17157864.4
(22) Date de dépôt: 24.02.2017
(51) Int. Cl.: F16D 21/06, F16D 25/12

(54) **SYSTEME HYDRAULIQUE DE COMMANDE POUR UN DOUBLE EMBRAYAGE HUMIDE**
HYDRAULISCHES STEUERUNGSSYSTEM FÜR EINE DOPPELNASSKUPPLUNG
HYDRAULIC CONTROL SYSTEM FOR A WET DUAL CLUTCH

(30) Priorité: 16.03.2016 FR 1652224
(43) Date de publication de la demande: 20.09.2017
(73) Titulaire: Valeo Embrayages, 80009 Amiens Cedex 2 (FR)
(72) Inventeur: DOLE, Arnaud, 80800 Marcelcave (FR); THIBAUT, François, 80330 Longueau (FR)
(74) Mandataire: Cardon, Nicolas

(56) Documents cités:
- EP-A2- 2 161 466
- DE-A1-102014 209 618
- FR-A1- 2 867 820

## Description

### Domaine technique

L'invention se rapporte au domaine des transmissions pour véhicule automobile.

L'invention concerne plus particulièrement un double embrayage humide destiné à être disposé, dans une chaîne de transmission d'un véhicule automobile, entre un bloc moteur et une boîte de vitesses comprenant deux arbres d'entrée.

### Arrière-plan technologique

Un double embrayage humide comporte un moyeu d'entrée destiné à être solidarisé en rotation à un volant moteur fixé au vilebrequin du moteur et deux embrayages comportant chacun un porte-disque d'entrée lié en rotation au moyeu d'entrée, un porte-disque de sortie lié en rotation à l'un ou l'autre des deux arbres d'entrée d'une boîte de vitesses et un ensemble multidisque qui est destiné à transmettre un couple entre le porte-disque d'entrée et le porte-disque de sortie dudit embrayage lorsque ledit embrayage est dans sa position embrayée. Un tel double embrayage est par exemple connu du document DE 10 2014 209 618 A1 L'un des arbres d'entrée de la boîte de vitesses, lié en rotation au porte-disque de sortie de l'un des embrayages, correspond aux rapports impairs de la boîte de vitesses tandis que l'autre arbre d'entrée, lié en rotation au porte-disque de sortie de l'autre embrayage, correspond aux rapports pairs. Ainsi, pour effectuer un changement de rapport, l'un des embrayages est déplacé de sa position embrayée vers sa position débrayée tandis que l'autre embrayage est déplacé de sa position débrayée vers sa position embrayée. Un tel double embrayage permet ainsi de changer de rapport de vitesse sans rupture de couple.

Il est connu de l'état de la technique, et notamment du document US20150219167, un tel double embrayage humide dans lequel les porte-disques d'entrée sont supportés par un moyeu qui est monté en rotation sur un arbre de commande fixé sur le carter de la boîte de vitesses. Chacun des embrayages est commandé par un piston respectif qui est monté mobile axialement sur le moyeu entre une position débrayée et une position embrayée dans laquelle il presse les disques de l'ensemble multidisque dudit embrayage les uns contre les autres afin de transmettre un couple entre les portes-disques d'entrée et de sortie respectifs. Chacun des pistons est disposé entre une chambre d'activation, qui lorsqu'elle est mise sous pression permet de déplacer le piston de sa position débrayée vers sa position embrayée, et une chambre d'équilibrage qui permet de compenser la pression dynamique induite par la force centrifuge. L'arbre de commande comporte une pluralité de canaux d'alimentation en huile qui sont chacun reliés avec un ou plusieurs perçages respectifs ménagés dans le moyeu ; lesdits perçages débouchant chacun dans l'une des chambres d'activation ou d'équilibrage. Des joints dynamiques d'étanchéité sont disposés entre l'arbre de commande et le moyeu et permettent de séparer de manière étanche les canaux de l'arbre de commande Par ailleurs, les chambres de compensation autorisent la circulation de fluide vers les ensembles multidisques de manière à assurer une lubrification et un refroidissement desdits ensembles multidisques.

Un tel double embrayage n'est pas totalement satisfaisant puisque la présence de joints dynamiques d'étanchéité, a pour effet de générer des frottements qui induisent un couple de traînée responsable d'un surplus de consommation énergétique.

Il est par ailleurs connu, et notamment du DE102014212805, des doubles embrayages humides qui sont actionnés au moyen d'un système hydraulique de commande comportant, un carter, destiné à être fixé sur la boîte de vitesses, présentant deux chambres annulaires concentriques et deux pistons annulaires mobiles axialement respectivement dans l'une et l'autre des deux chambres annulaires. Chacun des pistons porte une butée tournante qui est en appui contre un organe de transmission de force coopérant avec l'un ou l'autre des deux embrayages de sorte à déplacer ledit embrayage entre une position débrayée et une position embrayée lors du mouvement du piston à l'intérieur de sa chambre annulaire respective. Un tel système de commande permet de limiter le couple de trainée et offre, par conséquent, des performances de consommation énergétique satisfaisantes.

Toutefois, l'alimentation en fluide destiné au refroidissement des embrayages se fait au travers de l'un des arbres d'entrée de la boîte de vitesses, ce qui complexifie la fabrication de la boîte de vitesses.

### Résumé

Une idée à la base de l'invention est de résoudre les inconvénients de l'art antérieur en proposant un double embrayage humide offrant une faible consommation énergétique et assurant de manière simple le refroidissement des embrayages.

Selon un mode de réalisation, l'invention fournit un système hydraulique de commande pour un double embrayage humide qui comporte deux embrayages et est destiné à être disposé, dans une chaîne de transmission de véhicule automobile, entre un moteur présentant un vilebrequin et une boîte de vitesses comprenant deux arbres d'entrée s'étendant selon un axe X, le système hydraulique de commande comportant :
- un carter destiné à être fixé sur la boîte de vitesses, ledit carter comportant un tube interne s'étendant axialement autour de l'axe X et ménageant un espace interne destiné au passage des deux arbres coaxiaux d'entrée de la boite de vitesses, ledit carter comportant en outre une première et une deuxième chambres annulaires concentriques autour de l'axe X et disposées radialement autour du tube interne ; la première chambre annulaire étant située radialement à l'extérieur de la deuxième chambre annulaire ;
- un premier et un deuxième pistons annulaires qui sont respectivement montés coulissants axialement à l'intérieur de la première et la deuxième chambres annulaires entre une position de repos et une position active ; les premier et deuxième pistons annulaires portant chacun une butée tournante destinée à coopérer respectivement avec un premier et un deuxième organes de transmission de force ; le premier et le deuxième organes de transmission de force coopérant respectivement avec l'un et l'autre des deux embrayages du double embrayage afin de déplacer ledit embrayage entre une position débrayée et une position embrayée ; la position de repos et la position active du premier et du deuxième piston annulaire correspondant respectivement à une position débrayée et une position embrayée de l'embrayage respectif ;
le tube interne s'étendant axialement en direction des deux embrayages au-delà de la première et de la deuxième chambres annulaires et présentant au moins un canal de passage d'un fluide de refroidissement destiné à conduire ledit fluide de refroidissement vers les embrayages ;
ledit canal de passage d'un fluide de refroidissement présentant un orifice de sortie débouchant axialement au-delà de la butée tournante du deuxième piston annulaire quelle que soit la position dudit deuxième piston annulaire entre sa position de repos et sa position active.

Ainsi, un tel système hydraulique de commande ne nécessite pas la présence de joints dynamiques, ce qui permet de limiter le couple de trainée et, par conséquent, de limiter la consommation énergétique du moteur.

De plus, le circuit de refroidissement des embrayages est intégré au système hydraulique de commande du double embrayage, ce qui permet de réduire le nombre de composants du double embrayage humide, de diminuer son encombrement et contribue à augmenter la standardisation de ses composants.

Enfin, la circulation du fluide de refroidissement est particulièrement efficace en raison du positionnement axial adéquat de l'orifice de sortie, ce qui permet d'assurer un refroidissement performant du double embrayage. En particulier, le canal de passage du fluide de refroidissement débouchant au-delà de la course des pistons annulaires entre leur position active et leur position de repos, un refroidissement efficace des embrayages est assuré quelle que soit la position des embrayages et notamment lorsque ils sont positionnés au point de léchage et que les besoins en refroidissement sont les plus importants.

Selon d'autres modes de réalisation avantageux, un tel système hydraulique de commande peut présenter une ou plusieurs des caractéristiques suivantes.

Selon un mode de réalisation, l'orifice de sortie est orienté radialement.

Selon un mode de réalisation, le tube interne comporte une pluralité de canaux de passage du fluide de refroidissement répartis circonférentiellement autour de l'axe X, ce qui permet d'assurer un refroidissement efficace et homogène. Selon une réalisation, les canaux de passage du fluide de refroidissement sont équitablement répartis autour de l'axe X.

Selon un mode de réalisation, le tube interne est issu de matière, c'est-à-dire formé d'un seul tenant, avec le carter.

Selon un mode de réalisation, l'invention fournit un double embrayage humide destiné à être disposé, dans une chaîne de transmission de véhicule automobile, entre un moteur présentant un vilebrequin et une boîte de vitesses comprenant deux arbres d'entrée s'étendant selon un axe X, ledit double embrayage humide comportant deux embrayages qui sont respectivement aptes à transmettre un couple du vilebrequin vers l'un et l'autre des deux arbres d'entrée de la boîte de vitesses, chaque embrayage comportant :
- un porte-disque d'entrée destiné à être couplé en rotation au vilebrequin ;
- un porte-disque de sortie destiné à être couplé en rotation à l'un ou l'autre des deux arbres d'entrée de la boîte de vitesses ;
- un ensemble multidisque comportant au moins un disque de friction solidaire en rotation de l'un des porte-disques d'entrée et de sortie et au moins deux plateaux respectivement disposés de part et d'autre de chaque disque de friction, solidaires en rotation de l'autre des porte-disques d'entrée et de sortie, et mobiles axialement entre une position débrayée et une position embrayée dans laquelle lesdits plateaux pincent ledit disque de friction de manière à transmettre un couple entre le porte-disque d'entrée et le porte-disque de sortie ; et
- un organe de transmission de force mobile qui est apte à déplacer l'ensemble multidisque de sa position débrayée vers sa position embrayée ;
ledit double embrayage humide comportant en outre un système hydraulique de commande précité ; les deux butées tournantes respectivement portées par le premier et le deuxième pistons annulaires coopérant respectivement avec l'organe de transmission de force de l'un et l'autre des deux embrayages.

Selon d'autres modes de réalisation avantageux, un tel double embrayage humide peut présenter une ou plusieurs des caractéristiques suivantes.

Selon un mode de réalisation, les deux embrayages sont disposés radialement l'un à l'intérieur de l'autre, ce qui permet de limiter l'encombrement axial du double embrayage.

Selon un mode de réalisation, le canal de passage du fluide de refroidissement présente un orifice de sortie débouchant radialement à l'intérieur des deux embrayages.

Selon un mode de réalisation, le canal de passage du fluide de refroidissement présente un orifice de sortie débouchant axialement entre le porte-disque d'entrée et l'organe de transmission de force.

Selon un autre mode de réalisation, le canal de passage de fluide de refroidissement présente un orifice de sortie débouchant axialement entre le porte-disque d'entrée et l'un des porte-disques de sortie.

Selon un autre mode de réalisation, le canal de passage du fluide de refroidissement présente un orifice débouchant dans un plan perpendiculaire à l'axe X, ledit plan étant sécant avec une des jupes cylindriques des porte-disques de sortie.

Selon un mode de réalisation, le porte-disque d'entrée et le porte-disque de sortie de chacun des embrayages comportent des orifices radiaux répartis circonférentiellement autour de l'axe X et destinés à permettre une circulation du fluide de refroidissement radialement vers l'extérieur au travers de l'ensemble multidisque de chacun des embrayages depuis l'orifice de sortie du canal de passage du fluide de refroidissement.

Selon un mode de réalisation, les porte-disques d'entrée des deux embrayages sont fixés l'un à l'autre et sont montés tournants autour de l'axe X sur le tube interne du système hydraulique de commande à la faveur d'un palier. Ainsi, les porte-disques d'entrée étant supportés sur le système de commande, destiné à être fixé sur la boîte de vitesses, le palier est monté sur un élément stable et rigide qui n'est pas soumis à des débattements axiaux et/ou radiaux, ce qui assure une stabilité du double embrayage et une plus grande fiabilité du palier. En outre, le palier étant monté sur une tube interne présentant un diamètre relativement faible, le diamètre du palier est limité, ce qui permet de réduire son coût, notamment s'il s'agit d'un palier à roulement.

Selon un mode de réalisation, le palier est un palier à roulement. Le palier à roulement comporte une bague intérieure qui est montée autour du tube interne, une bague extérieure montée à l'intérieur d'un logement du porte-disque d'entrée de l'un des embrayages et des corps roulants interposés entre la bague intérieure et la bague extérieure. Selon une variante, la bague intérieure est retenue sur le tube interne selon une direction opposée au système de commande par un anneau élastique qui est montée dans une gorge ménagée sur le tube interne.

Selon un mode de réalisation, le palier à roulement est à contact oblique. De manière avantageuse, la reprise des efforts axiaux exercés par les pistons annulaires se fait par les contacts obliques du palier à roulement et l'anneau élastique, ce qui libère un passage radial pour le fluide de refroidissement entre le porte-disque d'entrée et un des porte-disques de sortie.

De manière avantageuse, le palier est monté sur une surface de portée du tube interne, ladite surface de portée étant positionnée, en direction des deux embrayages, au-delà des courses des premier et deuxième pistons annulaires entre leur position de repos et leur position active, lorsque les garnitures de friction des ensembles multidisques ne sont pas usées.

Selon un mode de réalisation, le double embrayage comporte un moyeu d'entrée comprenant des cannelures destinées à coopérer avec des cannelures complémentaires d'un élément fixé au vilebrequin du moteur thermique, tel qu'un volant moteur. Les porte-disques d'entrée sont fixés au moyeu d'entrée.

Selon un mode de réalisation, les porte-disques d'entrée sont disposés radialement à l'extérieur du porte-disque de sortie de leur embrayage respectif.

Selon un mode de réalisation, chaque porte-disque d'entrée ou de sortie comporte une jupe cylindrique ; chaque disque de friction ou plateau étant monté mobile axialement sur la jupe cylindrique de l'un des porte-disques de sortie ou d'entrée et de manière solidaire en rotation de celui-ci et l'un des porte-disques d'entrée comporte une portion de support dirigée radialement vers l'intérieur à partir d'un bord de sa jupe cylindrique dirigé vers le système hydraulique de commande ; ladite portion de support présentant un bord radialement interne coopérant avec le palier.

Selon un mode de réalisation, les porte-disques de sortie sont fixés à un moyeu de sortie ou formés d'un seul tenant avec lui, ledit moyeu de sortie comportant des cannelures coopérant avec des cannelures complémentaires ménagées à l'extrémité de l'un ou l'autre des arbres d'entrée de la boîte de vitesses.

Selon un mode de réalisation, les jupes cylindriques des porte-disques de sortie sont reliées à leur moyeu de sortie respectif par une portion radiale qui s'étend radialement vers l'intérieur à partir d'un bord de ladite jupe cylindrique dirigé dans une direction opposée au système hydraulique de commande.

Selon un mode de réalisation, l'ensemble multidisque de l'un des embrayages est disposé radialement à l'intérieur de l'ensemble multidisque de l'autre embrayage, le palier qui supporte les porte-disques d'entrée étant disposé radialement à l'intérieur des ensembles multidisques des embrayages et la portion de support présentant une zone interne qui est repliée dans une direction opposée au système hydraulique de commande, à l'intérieur des ensembles multidisques.

Selon un mode de réalisation, le canal de passage d'un fluide de refroidissement présente un orifice de sortie qui est ménagé dans une portion du tube interne qui est disposée axialement entre le palier qui supporte les porte-disques d'entrée des deux embrayages et les deux chambres annulaires du système hydraulique de commande ; la zone interne de la portion de support comportant des orifices répartis circonférentiellement autour de l'axe X et destinés à permettre une circulation du fluide de refroidissement.

Selon un mode de réalisation, le canal de passage d'un fluide de refroidissement présente un orifice de sortie qui est ménagé dans une portion du tube interne s'étendant axialement au-delà du palier qui supporte les porte-disques d'entrée des deux embrayages.

Selon un mode de réalisation, l'invention fournit également un véhicule automobile comportant un double embrayage du type précité.

### Brève description des figures

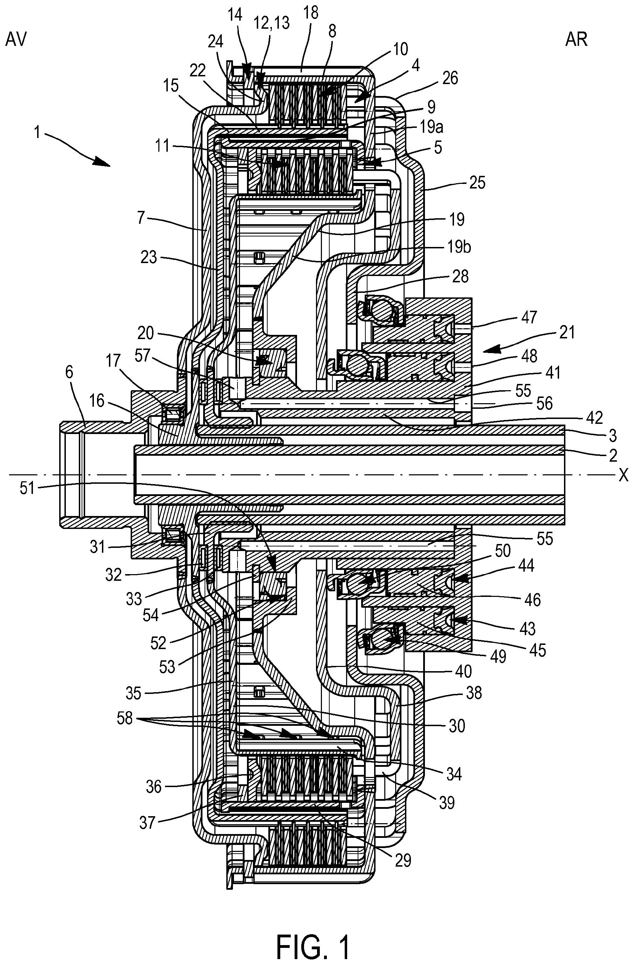

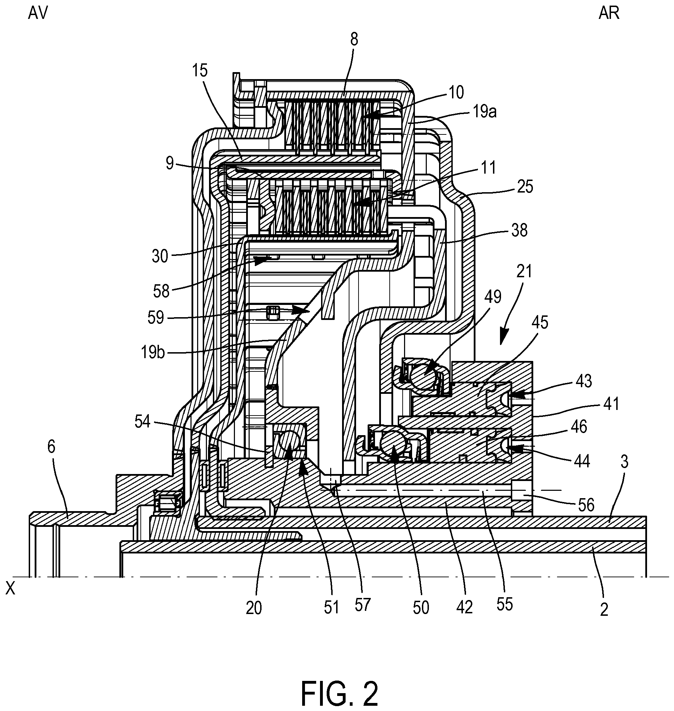

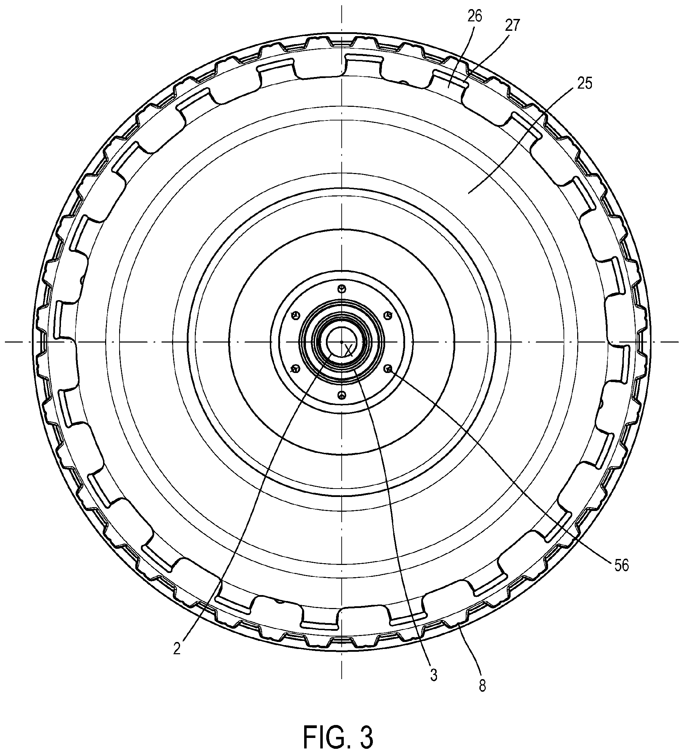

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue partielle en coupe d'un double embrayage humide selon un premier mode de réalisation.
- **La** **figure 2** est une demi-vue en coupe d'un double embrayage humide selon un autre mode de réalisation.
- **La** **figure 3** est une vue arrière du double embrayage humide de la figure 1.

### Description détaillée de modes de réalisation

Dans la description et les revendications, on utilisera, les termes "externe" et "interne" ainsi que les orientations "axiale" et "radiale" pour désigner, selon les définitions données dans la description, des éléments du double embrayage. Par convention, l'orientation "radiale" est dirigée orthogonalement à l'axe X de rotation du double embrayage déterminant l'orientation "axiale" et, de l'intérieur vers l'extérieur en s'éloignant dudit axe, l'orientation "circonférentielle" est dirigée orthogonalement à l'axe X et orthogonalement à la direction radiale. Les termes "externe" et "interne" sont utilisés pour définir la position relative d'un élément par rapport à un autre, par référence à l'axe X, un élément proche de l'axe X est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé proche du moteur thermique étant désigné par avant et un élément destiné à être placé proche de la boîte de vitesses étant désigné par arrière

En relation avec la figure 1, on observe un double embrayage 1 qui est destiné à être disposé entre un bloc moteur et une boîte de vitesses. Un tel double embrayage 1 vise à transmettre un couple du vilebrequin du moteur thermique sélectivement vers l'un ou l'autre des deux arbres 2, 3 coaxiaux d'entrée de la boîte de vitesses. L'arbre 2, intérieur, traverse le carter de la boîte de vitesses et s'étend longitudinalement selon l'axe X. L'arbre 3, creux, traverse également le carter de la boîte de vitesses et entoure l'arbre intérieur 2. Le double embrayage 1 comporte deux embrayages 4, 5 qui sont chacun destinés à accoupler temporairement le vilebrequin du moteur thermique à l'un des arbres 2, 3 d'entrée de la boîte de vitesses. L'un des arbres d'entrée 2, 3 de la boîte de vitesses correspond à certains rapports de la boîte de vitesses, par exemple les rapports de vitesse impairs et la marche arrière, et l'autre correspond aux autres rapports de vitesse, par exemple les rapports de vitesse pairs. Ainsi, pour effectuer un changement de rapport de vitesse, un des embrayages 4, 5 est déplacé de sa position embrayée vers sa position débrayée alors que l'autre embrayage 4, 5 est déplacé de sa position débrayée vers sa position embrayée, si bien que le couple moteur est transféré progressivement de l'un à l'autre des embrayages 4, 5. Un tel double embrayage 1 permet donc de changer de rapport de vitesse, sans rupture de couple, c'est-à-dire en maintenant la transmission d'un couple moteur aux roues du véhicule.

Le double embrayage 1 comprend un moyeu d'entrée 6 qui comporte des cannelures externes destinées à coopérer avec des cannelures complémentaires formées sur un élément fixé au vilebrequin du moteur thermique, tel qu'un volant moteur, simple ou double, non illustré.

Le double embrayage 1 est destiné à être logé dans un carter d'embrayage, non illustré, qui est fixé sur la boîte de vitesses. Le carter d'embrayage est fermé vers l'avant au moyen d'un capot de fermeture, non illustré, qui est guidé en rotation sur la surface cylindrique extérieure du moyeu d'entrée 6 au moyen d'un palier, non illustré. Le capot de fermeture porte au niveau de sa périphérie extérieure un joint annulaire qui coopère avec la surface intérieure du carter d'embrayage afin d'assurer l'étanchéité du double embrayage 1.

Le double embrayage 1 comporte également un voile d'entrée 7 qui est soudé au moyeu d'entrée 6 ou formé d'un seul tenant avec celui-ci. Le voile d'entrée est lié en rotation à un porte-disque d'entrée de chacun des deux embrayages 4, 5.

Les deux embrayages 4, 5 comportent chacun un ensemble multidisque 10, 11, c'est-à-dire un empilement axial de disques de friction et de plateaux. Les ensembles multidisques 10, 11 de l'un et l'autre des deux embrayages sont disposés radialement l'un à l'intérieur de l'autre, de manière à limiter l'encombrement axial du double embrayage 1.

Le premier embrayage 4, c'est-à-dire l'embrayage dont l'ensemble multidisque 10 est radialement à l'extérieur de celui de l'autre embrayage 5, comporte un porte-disque d'entrée 8 qui est fixé sur le voile d'entrée 7. Pour ce faire, le voile d'entrée 7 présente sur sa périphérie extérieure une denture externe 12 qui coopère avec une denture interne 13 formée sur la surface interne du porte-disque d'entrée 8 du premier embrayage 4 de manière à solidariser en rotation le voile d'entrée 7 audit porte-disque d'entrée 8. Par ailleurs, le voile d'entrée 7 est retenu axialement vers l'arrière par rapport au porte-disque d'entrée 8 du premier embrayage 4 au moyen d'un anneau d'arrêt 14. L'anneau d'arrêt 14 est par exemple un jonc de couplage élastique qui est logé dans une gorge ménagée au niveau de l'extrémité avant du porte-disque d'entrée 8 du premier embrayage 4.

Le premier embrayage 4 comporte également un porte-disque de sortie 15 qui est fixé à un moyeu de sortie 16 ou formé d'un seul tenant avec celui-ci. Le moyeu de sortie 16 est cannelé et coopère avec des cannelures complémentaires ménagées sur le pourtour extérieur de l'extrémité de l'un des arbres d'entrée de la boîte de vitesses, ici l'arbre intérieur 2. Ainsi, le moyeu de sortie 16 du porte-disque de sortie 15 est solidaire en rotation de l'arbre intérieur 2. Le moyeu de sortie 16 présente, à l'avant, sur sa périphérie extérieure un épaulement définissant une surface d'appui axial pour un palier 17. Le palier 17 coopère par ailleurs avec un épaulement ménagé sur la périphérie intérieure du moyeu d'entrée 6 et définissant une surface d'appui axiale pour ledit palier 17. Le palier 17 permet ainsi d'assurer le positionnement axial du porte-disque de sortie 15 du premier embrayage 4 par rapport au voile d'entrée 7. Le palier 17 est par exemple un palier à roulement.

Le porte-disque d'entrée 8 comporte une jupe cylindrique 18 d'orientation axiale dans laquelle est ménagée une denture interne et une portion de support 19 de forme annulaire qui s'étend radialement vers l'intérieur à partir de l'extrémité arrière de la jupe cylindrique 18. La portion de support 19 et la jupe cylindrique 18 peuvent être formées d'un seul tenant, dans une même tôle, comme dans le mode de réalisation représenté, ou être formées de deux pièces distinctes fixées l'une à l'autre. Le porte-disque d'entrée 8 est monté tournant sur le système hydraulique de commande 21 par l'intermédiaire d'un palier 20, décrit de manière plus détaillée par la suite, qui coopère d'une part avec le système de commande 21 et d'autre part avec le bord radialement interne de la portion de support 19. De manière avantageuse, afin de limiter l'encombrement axial du double embrayage, la portion de support 19 du porte-disque d'entrée 8 comporte une zone externe 19a qui présente une orientation radiale et est disposée à l'arrière des ensembles multidisques 10, 11 des deux embrayages 4, 5 et une zone interne 19b qui est repliée vers l'avant et s'étend ainsi radialement à l'intérieur des ensembles multidisques 10, 11.

Le porte-disque de sortie 15 comporte une jupe cylindrique 22 d'orientation axiale qui est disposée radialement à l'intérieur de la jupe cylindrique 18 du porte-disque d'entrée 8 et dans laquelle est ménagée une denture externe. Le porte-disque de sortie 15 comporte également une portion d'orientation radiale 23 qui s'étend radialement de l'extrémité avant de la jupe cylindrique 22 du porte-disque de sortie 15 jusqu'au moyeu de sortie 16.

L'ensemble multidisque 10 comporte une pluralité de plateaux annulaires, en acier par exemple, qui sont solidaires en rotation du porte-disque d'entrée 8 et montés coulissants axialement par rapport audit porte-disque d'entrée 8. Pour ce faire, chaque plateau comporte sur sa périphérie externe une denture externe qui est en prise avec la denture interne ménagée sur la face interne de la jupe cylindrique 18 du porte-disque d'entrée 8.

L'ensemble multidisque 10 comporte en outre une pluralité de disques de friction qui sont chacun interposés entre deux plateaux et sont solidaires en rotation du porte-disque de sortie 15 avec une liberté de translation axiale. Pour ce faire, chaque disque de friction comporte sur sa périphérie interne une denture interne qui est en prise avec la denture externe portée par la jupe cylindrique 22 du porte-disque de sortie 15. Chaque disque de friction comporte des garnitures de friction disposées sur chacune de ses faces, avant et arrière.

L'ensemble multidisque 10 est en appui vers l'avant contre une zone de réaction formée sur le voile d'entrée 7. La zone de réaction est, dans le mode de réalisation représenté, ménagé à la faveur d'un rebord annulaire 24 formé à proximité du pourtour externe du voile d'entrée 7. Par ailleurs, le plateau disposé à l'extrémité arrière de l'ensemble multidisque 10 coopère avec un organe de transmission de force 25. L'organe de transmission de force 25 est monté coulissant axialement et coopère avec le système hydraulique de commande 21, décrit de manière plus détaillée par la suite, qui est apte à faire coulisser axialement l'organe de transmission de force 25 vers l'avant afin de déplacer le premier embrayage 4 de sa position débrayée vers sa position embrayée. L'organe de transmission de force 25 est ici constitué d'une tôle métallique qui comporte au niveau de sa périphérie externe une pluralité de doigts 26 d'orientation axiale, régulièrement répartis autour de l'axe X. Comme représenté sur la figure 3, chaque doigt 26 passe au travers de la portion de support 19 du porte-disque d'entrée 8 à la faveur d'une ouverture 27 dédiée. En revenant à la figure 1, l'on observe que chaque doigt 26 est ainsi en appui contre le plateau disposé à l'extrémité arrière de l'ensemble multidisque 10 du premier embrayage 4.

Pour déplacer le premier embrayage 4 de sa position débrayée vers sa position embrayée, l'organe de transmission de force 25 est déplacé vers l'avant de manière à ce que chacun des disques de friction soit pincé entre deux plateaux et que le couple soit ainsi transmis entre le porte-disque d'entrée 8 et le porte-disque de sortie 15 et par conséquent entre le vilebrequin du moteur thermique et l'arbre intérieur 2 d'entrée de la boîte de vitesses.

A l'inverse, lorsque l'organe de transmission de force 25 n'est plus contraint vers l'avant, les disques de friction et les plateaux retrouvent leur position débrayée dans laquelle ils sont écartés axialement les uns des autres. Afin de faciliter le retour des disques de friction et des plateaux vers leur position débrayée, des rondelles élastiques ondulées, non illustrées, sont interposées entre les plateaux. Dans chaque intervalle entre deux plateaux voisins, une rondelle élastique est disposée radialement à l'extérieur du disque de friction située dans ledit intervalle.

Afin de limiter l'encombrement axial du double embrayage 1, l'organe de transmission de force 25 comporte au niveau de sa portion interne un renfoncement axial 28 vers l'avant à l'intérieur duquel est, au moins en partie, logé le système hydraulique de commande 21.

Le deuxième embrayage 5, c'est-à-dire l'embrayage dont l'ensemble multidisque 11 est disposé radialement à l'intérieur de celui de l'autre embrayage 4, présente une structure analogue au premier embrayage. Le deuxième embrayage 5 comporte un porte disque d'entrée 9 solidaire en rotation du voile d'entrée 7. Pour ce faire, le porte-disque d'entrée 9 du deuxième embrayage 5 est fixé, par exemple par soudage, sur la portion de support 19 du porte-disque d'entrée 8 du premier embrayage 4. Le porte-disque d'entrée 9 comporte une jupe cylindrique 29 d'orientation axiale qui est disposée radialement à l'intérieur de la jupe cylindrique 22 du porte disque de sortie 15 du premier embrayage 4. La jupe cylindrique 29 présente une denture interne.

Le deuxième embrayage 5 comporte également un porte-disque de sortie 30 qui est fixé à un moyeu de sortie 31 ou est formé d'un seul tenant avec celui-ci. Le moyeu de sortie 31 présente des cannelures internes qui coopèrent avec des cannelures complémentaires ménagées sur le pourtour extérieur de l'extrémité de l'un des arbres d'entrée de la boîte de vitesses, ici l'arbre extérieur 3. Afin d'assurer le positionnement axial du porte-disque de sortie 30, un premier palier axial 32 est interposé entre le moyeu de sortie 16 du premier embrayage 4 et le moyeu de sortie 31 du deuxième embrayage 5 et un deuxième palier axial 33 est interposé entre le moyeu de sortie 31 du deuxième embrayage 5 et un tube interne 42 du système hydraulique de commande 21.

Le porte-disque de sortie 30 comporte une jupe cylindrique 34 d'orientation axiale, disposée radialement à l'intérieur de la jupe cylindrique 29 du porte-disque d'entrée 9 et présentant une denture externe. Le porte-disque de sortie 30 comporte également une portion d'orientation radiale 35 qui s'étend radialement de l'extrémité avant de la jupe cylindrique 34 du porte-disque de sortie 30 jusqu'au moyeu de sortie 31.

L'ensemble multidisque 11 du deuxième embrayage 5 comporte une pluralité de plateaux annulaires présentant une structure analogue à celle des plateaux annulaires du premier embrayage 4. Chaque plateau comporte sur sa périphérie externe une denture externe qui coopère avec la denture complémentaire ménagée sur la face interne de la jupe cylindrique 29 du porte-disque d'entrée 9. L'ensemble multidisque 11 comporte en outre une pluralité de disques de friction qui présentent une structure analogue à ceux du premier embrayage 4 et sont montés solidaires en rotation du porte-disque de sortie 30 et coulissants axialement sur celui-ci. Pour ce faire, chaque disque de friction comporte sur sa périphérie interne une denture interne qui est en prise avec la denture externe ménagée sur la jupe cylindrique 34 du porte-disque de sortie 30. Chaque disque de friction est interposé entre deux plateaux.

Le plateau, disposé à l'extrémité avant de l'ensemble multidisque 11 coopère avec un organe de réaction 36. L'organe de réaction 36 est quant à lui retenu vers l'avant au moyen d'un anneau d'arrêt 37 qui est fixé sur le porte-disque d'entrée 9 du deuxième embrayage 5, au niveau de l'extrémité avant de sa jupe cylindrique 34.

Le deuxième embrayage 5 est actionné au moyen d'un organe de transmission de force 38 qui, d'une part, coopère avec le plateau disposé à l'extrémité arrière de l'ensemble multidisque 11 du deuxième embrayage 5 et, d'autre part, coopère avec la système hydraulique de commande 21 qui est apte à le faire coulisser axialement vers l'avant de manière à déplacer le deuxième embrayage 5 de sa position débrayée vers sa position embrayée. L'organe de transmission de force 38 est ici constitué d'une tôle métallique qui comporte au niveau de sa périphérie externe une pluralité de doigts 39 d'orientation axiale régulièrement répartis autour de l'axe X. Chaque doigt 39 passe au travers d'une ouverture dédiée ménagée dans la portion de support 19 du porte-disque d'entrée 8 du premier embrayage 4 et est ainsi en appui contre le plateau disposé à l'extrémité arrière de l'ensemble multidisque 11 du deuxième embrayage 5.

Pour déplacer le deuxième embrayage 5 de sa position débrayée vers sa position embrayée, l'organe de transmission de force 38 est déplacé vers l'avant de manière à ce que chacun des disques de friction soit pincé entre deux plateaux et que le couple soit ainsi transmis entre le porte-disque d'entrée 9 et le porte-disque de sortie 30 et par conséquent entre le vilebrequin du moteur thermique et l'arbre extérieur 3 d'entrée de la boîte de vitesses.

Afin de limiter l'encombrement axial du double embrayage, l'organe de transmission de force 38 comporte au niveau de sa portion interne un renfoncement axial 40 vers l'avant à l'intérieur duquel est, au moins en partie, logé le système hydraulique de commande 21.

Le double embrayage 1 comporte en outre un système hydraulique de commande 21 permettant d'actionner les deux embrayages 4, 5. Le système hydraulique de commande 21 comporte un carter 41 qui est fixé contre une paroi de la boîte de vitesses, non illustrée. Le carter 41 présente un tube interne 42 s'étendant axialement autour de l'axe X et ménageant un espace interne au travers duquel passent les arbres 2, 3 d'entrée de la boîte de vitesses. Le tube interne 42 est issu de matière avec le carter 41. Le carter 41 présente en outre une première et une deuxième chambres 43, 44 annulaires concentriques disposées radialement à l'extérieur du tube interne 42. Un premier et un deuxième pistons 45, 46 de forme annulaire sont respectivement montés mobiles en translation axiale à l'intérieur de la première et de la deuxième chambres 43, 44.

Le carter 41 présente en outre, pour chacune des première et deuxième chambres 43, 44, un canal 47, 48 d'alimentation en fluide sous pression débouchant à l'intérieur de ladite chambre 43, 44 de sorte à permettre son alimentation en fluide. Chacun des canaux 47, 48 est raccordé à un circuit hydraulique équipé d'une pompe. La première et la deuxième chambres 43, 44 sont ainsi destinées à être alimenter en fluide pour provoquer le déplacement du piston 45, 46 respectif vers l'avant de sa position de repos vers sa position active.

Chacun des premier et deuxième pistons 45, 46 porte une butée tournante 49, 50 qui est fixée à l'extrémité dudit piston 43, 44. Chaque butée tournante 49, 50 comporte une bague qui est fixée au piston 43, 44, une autre bague en appui contre l'un des organes de transmission de force 25, 38 et des corps roulants, tels que des billes, interposés entre les deux bagues.

Le tube interne 42 s'étend axialement vers l'avant au-delà des première et deuxième chambres 43, 44. Par ailleurs, au-delà de la course des premier et deuxième pistons 45, 46 correspondant au déplacement des premier et deuxième embrayages 4, 5 de leur position débrayée vers leur position embrayée, le tube interne 42 comporte une surface cylindrique de portée 51 sur laquelle est monté le palier 20 supportant les porte-disques d'entrée 8, 9 des embrayages 4, 5. Le palier 20 est ici un palier à roulement comportant une bague intérieure qui est montée autour de la surface cylindrique de portée 51 du tube interne 42, une bague extérieure qui est montée à l'intérieur d'un logement 52 ménagé au niveau du bord radialement interne de la portion de support 19 du porte-disque d'entrée 8 du premier embrayage 4 et des corps roulants, tels que des billes, interposés entre la bague extérieure et la bague intérieure. Le palier à roulement est à contact oblique. Le logement 52 comporte, vers l'arrière un épaulement 53 permettant de retenir la bague extérieure vers l'arrière. Par ailleurs, la bague intérieure est retenue vers l'avant par un anneau élastique 54 du type « circlip » qui est monté dans une gorge ménagée dans le tube interne 42, à l'avant de la surface cylindrique de portée 51. Le diamètre extérieur de la surface cylindrique de portée 51 est inférieur à l'alésage interne de l'organe de transmission de force 38.

Le tube interne 42 du système hydraulique de commande 21 comporte une pluralité de canaux 55 de passage d'un fluide de refroidissement, tel que de l'huile de boîte de vitesses, destiné à assurer le refroidissement et la lubrification des ensembles multidisques 10, 11. Les canaux 55 sont équitablement répartis autour de l'axe X.

Chaque canal 55 s'étend axialement entre un orifice d'entrée 56 débouchant au niveau de la face arrière du carter 41 du système hydraulique de commande et un orifice de sortie 57 débouchant au niveau de l'extrémité avant du tube interne 42. Les orifices d'entrée 55 sont raccordés à un circuit hydraulique équipé d'une pompe. Les orifices de sortie 57 sont régulièrement répartis autour de l'axe X et débouchent radialement à l'intérieur des ensembles multidisques 10, 11. Les orifices de sortie 57 sont dirigés radialement vers l'extérieur afin de guider le fluide de refroidissement radialement vers l'extérieur en direction des ensembles multidisques 10, 11. Dans le mode de réalisation représenté, les orifices de sortie 57 débouchent axialement au niveau d'une portion du tube interne s'étendant au-delà de la surface cylindrique de portée 51 sur laquelle est monté le palier 20. Le fluide de refroidissement passe alors entre les porte-disques d'entrée 8, 9 et les porte-disques de sortie 15, 30.

Afin de permettre une circulation de l'huile des orifices de sortie vers l'extérieur du double embrayage, en passant au travers des ensembles multidisques 10, 11, les jupes cylindriques 29, 34 des porte-disques d'entrée et de sortie 9, 30 du deuxième embrayage 5 et les jupes cylindriques 18, 22 des porte-disques d'entrée et de sortie 8, 15 du premier embrayage 4 présentent des orifices radiaux 58. Sur la figure 1, seuls les orifices 58 du porte-disque de sortie 30 du deuxième embrayage 5 sont visibles.

La figure 2 illustre un double embrayage 1 selon un autre mode de réalisation. Ce mode de réalisation ne diffère du mode de réalisation précédent qu'en ce que, si les orifices de sortie 57 des canaux 55 destinées à assurer la circulation du fluide de refroidissement débouchent radialement à l'intérieur des ensembles multidisques 10, 11, ils débouchent dans une portion du tube interne 42 disposée axialement entre les chambres 43, 44 du système hydraulique de commande 21 et la surface cylindrique de portée 51 recevant le palier 20. Le fluide de refroidissement passe alors entre les porte-disques d'entrée 8, 9 et l'organe de transmission de force 38. Dans un tel mode de réalisation, la zone interne 19a de la portion de support 19 du porte-disque d'entrée 8 du premier embrayage 4 est alors pourvue d'orifices 59, régulièrement répartis autour de l'axe X, de manière à permettre la circulation du fluide de refroidissement vers les ensembles multidisques 10, 11.

Selon un autre mode de réalisation non représenté, les orifices de sortie des canaux 55 débouchent suivant l'axe X alternativement de part et d'autre de la surface cylindrique de portée 51 recevant le palier 20.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Système hydraulique de commande (21) pour un double embrayage humide (1) qui comporte deux embrayages (4, 5) et est destiné à être disposé, dans une chaîne de transmission de véhicule automobile, entre un moteur présentant un vilebrequin et une boîte de vitesses comprenant deux arbres (2, 3) coaxiaux d'entrée s'étendant selon un axe X, le système hydraulique de commande (21) comportant :
- un carter (41) destiné à être fixé sur la boîte de vitesses, ledit carter (41) comportant un tube interne (42) s'étendant axialement autour de l'axe X et ménageant un espace interne destiné au passage des deux arbres (2, 3) d'entrée de la boite de vitesses, ledit carter (41) comportant en outre une première et une deuxième chambres annulaires (43, 44), concentriques autour de l'axe X, et disposées radialement autour du tube interne (42) ; la première chambre annulaire (43) étant située radialement à l'extérieur de la deuxième chambre annulaire (44) ;
- un premier et un deuxième pistons annulaires (45, 46) qui sont respectivement montés coulissants axialement à l'intérieur de la première et la deuxième chambres annulaires (43, 44) entre une position de repos et une position active ; les premier et deuxième pistons annulaires (45, 46) portant chacun une butée tournante (49, 50) destinée à coopérer respectivement avec un premier et un deuxième organes de transmission de force (25, 38) ; le premier et le deuxième organes de transmission de force (25, 38) coopérant respectivement avec l'un et l'autre des deux embrayages (4, 5) du double embrayage afin de déplacer ledit embrayage (4, 5) entre une position débrayée et une position embrayée ; la position de repos et la position active du premier et du deuxième piston annulaire (45, 46) correspondant respectivement à une position débrayée et une position embrayée de l'embrayage (4, 5) respectif ;
**caractérisé en ce que** le tube interne (42) s'étend axialement en direction des deux embrayages (4, 5) au-delà de la première et de la deuxième chambres annulaires (43, 44) et présente au moins un canal (55) de passage d'un fluide de refroidissement destiné à conduire ledit fluide de refroidissement vers les embrayages (4, 5) ; ledit canal (55) de passage d'un fluide de refroidissement présentant un orifice de sortie (57) débouchant axialement au-delà de la butée tournante (49) du deuxième piston annulaire (46) quelle que soit la position dudit deuxième piston annulaire entre sa position de repos et sa position active.

2. Système hydraulique de commande selon la revendication 1, dans lequel l'orifice de sortie (57) est orienté radialement.

3. Système hydraulique de commande selon la revendication 1 ou 2, dans lequel le tube interne (42) est issu de matière avec le carter (41).

4. Système hydraulique de commande selon l'une quelconque des revendications 1 à 3, dans lequel le tube interne (42) comporte une pluralité de canaux (55) de passage du fluide de refroidissement répartis circonférentiellement autour de l'axe X.

5. Double embrayage humide (1) destiné à être disposé dans une chaîne de transmission de véhicule automobile, entre un moteur présentant un vilebrequin et une boîte de vitesses comprenant deux arbres (2, 3) coaxiaux d'entrée s'étendant selon un axe X, ledit double embrayage humide (1) comportant deux embrayages (4, 5) qui sont respectivement aptes à transmettre un couple du vilebrequin vers l'un et l'autre des deux arbres (2, 3) d'entrée de la boîte de vitesses, chaque embrayage (4, 5) comportant :
- un porte-disque d'entrée (8, 9) destiné à être couplé en rotation au vilebrequin ;
- un porte-disque de sortie (15, 30) destiné à être couplé en rotation à l'un ou l'autre des deux arbres d'entrée de la boîte de vitesses ;
- un ensemble multidisque (10, 11) comportant au moins un disque de friction solidaire en rotation de l'un des porte-disques d'entrée et de sortie (8, 9, 15, 30) et au moins deux plateaux respectivement disposés de part et d'autre de chaque disque de friction, solidaires en rotation de l'autre des porte-disques d'entrée et de sortie (8, 9, 15, 30), et mobiles axialement entre une position débrayée et une position embrayée dans laquelle lesdits plateaux pincent ledit disque de friction de manière à transmettre un couple entre le porte-disque d'entrée (8, 9) et le porte-disque de sortie (15, 30) ; et
- un organe de transmission de force (25, 38) mobile qui est apte à déplacer l'ensemble multidisque (10, 11) de sa position débrayée vers sa position embrayée ;
ledit double embrayage humide (1) comportant en outre un système hydraulique de commande (21) selon l'une quelconque des revendications 1 à 4 ; les deux butées tournantes (49, 50) respectivement portées par le premier et le deuxième pistons annulaires (45, 46) coopérant respectivement avec l'organe de transmission de force (25, 38) de l'un et l'autre des deux embrayages (4, 5).

6. Double embrayage humide (1) selon la revendication 5, dans lequel les deux embrayages (4, 5) sont disposés radialement l'un à l'intérieur de l'autre.

7. Double embrayage humide (1) selon la revendication 6, dans lequel le canal (55) de passage du fluide de refroidissement présente l' orifice de sortie (57) débouchant radialement à l'intérieur des deux embrayages (4, 5).

8. Double embrayage humide (1) selon l'une quelconque des revendications 5 à 7, dans lequel le porte-disque d'entrée (8, 9) et le porte-disque de sortie (15, 30) de chacun des embrayages (4, 5) comportent des orifices radiaux (58) répartis circonférentiellement autour de l'axe X et destinés à permettre une circulation du fluide de refroidissement radialement vers l'extérieur au travers de l'ensemble multidisque (10, 11) de chacun des embrayages (4, 5) depuis le canal (55) de passage du fluide de refroidissement.

9. Double embrayage humide (1) selon l'une quelconque des revendications 5 à 8, dans lequel les porte-disques d'entrée (8, 9) des deux embrayages (4, 5) sont fixés l'un à l'autre et sont montés tournants autour de l'axe X sur le tube interne (42) du système hydraulique de commande (21) par l'intermédiaire d'un palier (20).

10. Double embrayage humide (1) selon la revendication 9, dans lequel chaque porte-disque d'entrée ou de sortie (8, 9, 15, 30) comporte une jupe cylindrique (18, 22, 29, 34); chaque disque de friction ou plateau étant monté mobile axialement sur la jupe cylindrique de l'un des porte-disques de sortie ou d'entrée et de manière solidaire en rotation de celui-ci et dans lequel l'un des porte-disques d'entrée (8, 9) comporte une portion de support (19) dirigée radialement vers l'intérieur à partir d'un bord de sa jupe cylindrique (18); ladite portion de support (19) présentant un épaulement (53) coopérant avec le palier (20).

11. Double embrayage humide (1) selon la revendication 10, dans lequel l'ensemble multidisque (10) de l'un des embrayages (4) est disposé radialement à l'intérieur de l'ensemble multidisque (11) de l'autre embrayage (5), dans lequel le palier (20) est disposé radialement à l'intérieur des ensembles multidisques (10,11) des embrayages (4, 5) et dans lequel la portion de support (19) présente une zone interne (19b) qui est repliée dans une direction opposée au système hydraulique de commande (21), à l'intérieur des ensembles multidisques.

12. Double embrayage humide (1) selon la revendication 11, dans lequel le canal (55) de passage d'un fluide de refroidissement présente l' orifice de sortie (57) qui est ménagé dans une portion du tube interne (42) qui est disposée axialement entre le palier (20) qui supporte les porte-disques d'entrée (8, 9) des deux embrayages (4, 5) et les deux chambres annulaires du système hydraulique de commande (21) ; la zone interne (19b) de la portion de support (19) comportant des orifices (59) répartis circonférentiellement autour de l'axe X et destinés à permettre une circulation du fluide de refroidissement.

13. Double embrayage humide (1) selon l'une quelconque des revendications 9 à 11, dans lequel le canal (55) de passage d'un fluide de refroidissement présente l' orifice de sortie (57) qui est ménagé dans une portion du tube interne s'étendant axialement au-delà du palier (20) qui supporte les porte-disques d'entrée (8, 9) des deux embrayages (4, 5).

14. Double embrayage humide (1) selon l'une quelconque des revendications 5 à 13, dans lequel le canal (55) de passage d'un fluide de refroidissement présente l' orifice de sortie (57) débouchant dans un plan perpendiculaire à l'axe X, ledit plan étant sécant avec l'une des jupes cylindriques (22, 34) des porte-disques de sortie (15, 30).

15. Véhicule automobile comportant un double embrayage humide (1) selon l'une quelconque des revendications 5 à 14.

## Patentansprüche

1. Hydraulisches Steuersystem (21) für eine Doppelnasskupplung (1), die zwei Kupplungen (4, 5) aufweist und dazu bestimmt ist, in einer Antriebskette eines Kraftfahrzeugs zwischen einem eine Kurbelwelle aufweisenden Motor und einem Schaltgetriebe angeordnet zu werden, das zwei koaxiale Eingangswellen (2, 3) enthält, die sich gemäß einer X-Achse erstrecken, wobei das hydraulische Steuersystem (21) aufweist:
- ein Gehäuse (41), das dazu bestimmt ist, am Schaltgetriebe befestigt zu werden, wobei das Gehäuse (41) ein inneres Rohr (42) aufweist, das sich axial um die X-Achse erstreckt und einen Innenraum freilässt, der für den Durchgang der zwei Eingangswellen (2, 3) des Schaltgetriebes bestimmt ist, wobei das Gehäuse (41) außerdem eine erste und eine zweite Ringkammer (43, 44) konzentrisch um die X-Achse und radial um das innere Rohr (42) herum angeordnet aufweist; wobei die erste Ringkammer (43) sich radial außerhalb der zweiten Ringkammer (44) befindet;
- einen ersten und einen zweiten Ringkolben (45, 46), die je innerhalb der ersten und der zweiten Ringkammer (43, 44) zwischen einer Ruhestellung und einer aktiven Stellung axial gleitend montiert sind; wobei der erste und der zweite Ringkolben (45, 46) je einen drehenden Anschlag (49, 50) tragen, der dazu bestimmt ist, mit einem ersten bzw. zweiten Kraftübertragungsorgan (25, 38) zusammenzuwirken; wobei das erste und das zweite Kraftübertragungsorgan (25, 38) mit der einen bzw. der anderen der zwei Kupplungen (4, 5) der Doppelkupplung zusammenwirkt, um die Kupplung (4, 5) zwischen einer ausgekuppelten und einer eingekuppelten Stellung zu verschieben; wobei die Ruhestellung und die aktive Stellung des ersten und des zweiten Ringkolbens (45, 46) einer ausgekuppelten bzw. einer eingekuppelten Stellung der jeweiligen Kupplung (4, 5) entsprechen;
**dadurch gekennzeichnet, dass** das innere Rohr (42) sich axial in Richtung der zwei Kupplungen (4, 5) jenseits der ersten und der zweiten Ringkammer (43, 44) erstreckt und mindestens einen Durchgangskanal (55) eines Kühlmittels aufweist, der dazu bestimmt ist, das Kühlmittel zu den Kupplungen (4, 5) zu leiten; wobei der Durchgangskanal (55) eines Kühlmittels eine Ausgangsöffnung (57) aufweist, die axial jenseits des drehenden Anschlags (49) des zweiten Ringkolbens (46) mündet, unabhängig von der Stellung des zweiten Ringkolbens zwischen seiner Ruhestellung und seiner aktiven Stellung.

2. Hydraulisches Steuersystem nach Anspruch 1, wobei die Ausgangsöffnung (57) radial ausgerichtet ist.

3. Hydraulisches Steuersystem nach Anspruch 1 oder 2, wobei das innere Rohr (42) aus einem Material mit dem Gehäuse (41) stammt.

4. Hydraulisches Steuersystem nach einem der Ansprüche 1 bis 3, wobei das innere Rohr (42) eine Vielzahl von Durchgangskanälen (55) des Kühlmittels aufweist, die in Umfangsrichtung um die X-Achse verteilt sind.

5. Doppelnasskupplung (1), die dazu bestimmt ist, in einer Antriebskette eines Kraftfahrzeugs zwischen einem eine Kurbelwelle aufweisenden Motor und einem Schaltgetriebe angeordnet zu werden, das zwei koaxiale Eingangswellen (2, 3) enthält, die sich gemäß einer X-Achse erstrecken, wobei die Doppelnasskupplung (1) zwei Kupplungen (4, 5) aufweist, die je fähig sind, ein Drehmoment der Kurbelwelle zur einen oder anderen der zwei Eingangswellen (2, 3) des Schaltgetriebes zu übertragen, wobei jede Kupplung (4, 5) aufweist:
- einen Eingangsscheibenträger (8, 9), der dazu bestimmt ist, in Drehung mit der Kurbelwelle gekoppelt zu werden;
- einen Ausgangsscheibenträger (15, 30), der dazu bestimmt ist, mit der einen oder der anderen der zwei Eingangswellen des Schaltgetriebes gekoppelt zu werden;
- eine Mehrscheibeneinheit (10, 11), die mindestens eine in Drehung fest mit einem der Eingangs- und Ausgangsscheibenträger (8, 9, 15, 30) verbundene Reibscheibe und mindestens zwei Platten aufweist, die je zu beiden Seiten jeder Reibscheibe angeordnet, in Drehung fest mit dem anderen der Eingangs- und Ausgangsscheibenträger (8, 9, 15, 30) verbunden und axial zwischen einer ausgekoppelten und einer eingekoppelten Stellung beweglich sind, in der die Platten die Reibscheibe so einklemmen, dass ein Drehmoment zwischen dem Eingangsscheibenträger (8, 9) und dem Ausgangsscheibenträger (15, 30) übertragen wird; und
- ein bewegliches Kraftübertragungsorgan (25, 38), das die Mehrscheibeneinheit (10, 11) von ihrer ausgekuppelten Stellung in ihre eingekuppelte Stellung verschieben kann;
wobei die Doppelnasskupplung (1) außerdem ein hydraulisches Steuersystem (21) nach einem der Ansprüche 1 bis 4 aufweist; wobei die zwei drehenden Anschläge (49, 50), die vom ersten bzw. zweiten Ringkolben (45, 46) getragen werden, mit dem Kraftübertragungsorgan (25, 38) der einen bzw. der anderen der zwei Kupplungen (4, 5) zusammenwirken.

6. Doppelnasskupplung (1) nach Anspruch 5, wobei die zwei Kupplungen (4, 5) radial ineinander angeordnet sind.

7. Doppelnasskupplung (1) nach Anspruch 6, wobei der Durchgangskanal (55) des Kühlmittels die Ausgangsöffnung (57) aufweist, die radial innerhalb der zwei Kupplungen (4, 5) mündet.

8. Doppelnasskupplung (1) nach einem der Ansprüche 5 bis 7, wobei der Eingangsscheibenträger (8, 9) und der Ausgangsscheibenträger (15, 30) jeder der Kupplungen (4, 5) radiale Öffnungen (58) aufweisen, die in Umfangsrichtung um die X-Achse verteilt und dazu bestimmt sind, eine Strömung des Kühlmittels vom Durchgangskanal (55) des Kühlmittels radial nach außen durch die Mehrscheibeneinheit (10, 11) jeder der Kupplungen (4, 5) hindurch zu erlauben.

9. Doppelnasskupplung (1) nach einem der Ansprüche 5 bis 8, wobei die Eingangsscheibenträger (8, 9) der zwei Kupplungen (4, 5) aneinander befestigt und um die X-Achse drehend auf das innere Rohr (42) des hydraulischen Steuersystems (21) mittels eines Lagers (20) montiert sind.

10. Doppelnasskupplung (1) nach Anspruch 9, wobei jeder Eingangs- oder Ausgangsscheibenträger (8, 9, 15, 30) eine zylindrische Schürze (18, 22, 29, 34) aufweist; wobei jede Reibscheibe oder Platte auf die zylindrische Schürze eines der Ausgangs- oder Eingangsscheibenträger axial beweglich und drehfest mit diesem verbunden montiert ist, und wobei einer der Eingangsscheibenträger (8, 9) einen Tragabschnitt (19) aufweist, der ausgehend von einem Rand seiner zylindrischen Schürze (18) radial nach innen ausgerichtet ist; wobei der Tragabschnitt (19) eine Schulter (53) aufweist, die mit dem Lager (20) zusammenwirkt.

11. Doppelnasskupplung (1) nach Anspruch 10, wobei die Mehrscheibeneinheit (10) einer der Kupplungen (4) radial innerhalb der Mehrscheibeneinheit (11) der anderen Kupplung (5) angeordnet ist, wobei das Lager (20) radial innerhalb der Mehrscheibeneinheiten (10, 11) der Kupplungen (4, 5) angeordnet ist, und wobei der Tragabschnitt (19) eine innere Zone (19b) aufweist, die in einer Richtung entgegengesetzt zum hydraulischen Steuersystem (21) innerhalb der Mehrscheibeneinheiten umgebogen ist.

12. Doppelnasskupplung (1) nach Anspruch 11, wobei der Durchgangskanal (55) eines Kühlmittels die Ausgangsöffnung (57) aufweist, die in einem Abschnitt des inneren Rohrs (42) ausgespart ist, der axial zwischen dem die Eingangsscheibenträger (8, 9) der zwei Kupplungen (4, 5) tragenden Lager (20) und den zwei Ringkammern des hydraulischen Steuersystems (21) angeordnet ist; wobei die innere Zone (19b) des Tragabschnitts (19) Öffnungen (59) aufweist, die in Umfangsrichtung um die X-Achse verteilt und dazu bestimmt sind, eine Strömung des Kühlmittels zu erlauben.

13. Doppelnasskupplung (1) nach einem der Ansprüche 9 bis 11, wobei der Durchgangskanal (55) eines Kühlmittels die Ausgangsöffnung (57) aufweist, die in einem Abschnitt des inneren Rohrs angeordnet ist, der sich axial jenseits des die Eingangsscheibenträger (8, 9) der zwei Kupplungen (4, 5) tragenden Lagers (20) erstreckt.

14. Doppelnasskupplung (1) nach einem der Ansprüche 5 bis 13, wobei der Durchgangskanal (55) eines Kühlmittels die Ausgangsöffnung (57) aufweist, die in einer Ebene lotrecht zur X-Achse mündet, wobei die Ebene eine der zylindrischen Schürzen (22, 34) der Ausgangsscheibenträger (15, 30) schneidet.

15. Kraftfahrzeug, das eine Doppelnasskupplung (1) nach einem der Ansprüche 5 bis 14 aufweist.

## Claims

1. Hydraulic control system (21) for a wet dual clutch (1) which comprises two clutches (4, 5) and is intended to be arranged, in a motor vehicle transmission, between an engine having a crankshaft and a gearbox comprising two coaxial input shafts (2, 3) extending along an axis X, the hydraulic control system (21) comprising:
- a casing (41) intended to be fixed to the gearbox, the said casing (41) comprising an internal tube (42) extending axially about the axis X and creating an internal space intended for the passage of the two input shafts (2, 3) of the gearbox, the said casing (41) further comprising a first and a second annular chamber (43, 44) which are concentric about the axis X, and positioned radially around the internal tube (42); the first annular chamber (43) being situated radially on the outside of the second annular chamber (44);
- a first and a second annular piston (45, 46) which are respectively mounted with the ability to slide axially inside the first and second annular chambers (43, 44) between a rest position and an active position; the first and second annular pistons (45, 46) each bearing a rotary thrust bearing (49, 50) intended respectively to collaborate with a first and a second force transmission member (25, 38); the first and second force transmission members (25, 38) respectively collaborating with each of the two clutches (4, 5) of the dual clutch so as to move the said clutch (4, 5) between a disengaged position and an engaged position; the rest position and the active position of the first and of the second annular piston (45, 46) respectively corresponding to a disengaged position and an engaged position of the respective clutch (4, 5);
**characterized in that** the internal tube (42) extends axially in the direction of the two clutches (4, 5) beyond the first and second annular chambers (43, 44) and exhibits at least one canal (55) for the passage of a cooling fluid intended to lead the said cooling fluid towards the clutches (4, 5); the said canal (55) for the passage of a cooling fluid exhibiting an outlet orifice (57) opening axially beyond the rotary thrust bearing (49) of the second annular piston (46) whatever the position of the said second annular piston between its rest position and its active position.

2. Hydraulic control system according to Claim 1, in which the outlet orifice (57) is oriented radially.

3. Hydraulic control system according to Claim 1 or 2, in which the internal tube (42) is formed of one piece with the casing (41).

4. Hydraulic control system according to any one of Claims 1 to 3, in which the internal tube (42) comprises a plurality of canals (55) for the passage of the cooling fluid and which are distributed circumferentially about the axis X.

5. Wet dual clutch (1) intended to be positioned in a motor vehicle transmission, between an engine having a crankshaft and a gearbox comprising two coaxial input shafts (2, 3) extending along an axis X, the said wet dual clutch (1) comprising two clutches (4, 5) which are respectively able to transmit torque from the crankshaft to each of the two input shafts (2, 3) of the gearbox, each clutch (4, 5) comprising:
- an input disc carrier (8, 9) intended to be coupled in terms of rotation to the crankshaft;
- an output disc carrier (15, 30) intended to be coupled in terms of rotation to one or other of the two input shafts of the gearbox;
- a multidisc assembly (10, 11) comprising at least one friction disc rotating as one with one of the input and output disc carriers (8, 9, 15, 30) and at least two plates respectively positioned one on each side of each friction disc, rotating as one with the other of the input and output disc carriers (8, 9, 15, 30) and able to move axially between a clutch-disengaged position and a clutch-engaged position in which the said plates grip the said friction disc so as to transmit torque between the input disc carrier (8, 9) and the output disc carrier (15, 30); and
- a mobile force transmission member (25, 38) which is able to move the multidisc assembly (10, 11) from its clutch-disengaged position towards its clutch-engaged position;
the said wet dual clutch (1) further comprising a hydraulic control system (21) according to any one of Claims 1 to 4; the two rotary thrust bearings (49, 50) respectively borne by the first and second annular pistons (45, 46) respectively collaborating with the force transmission member (25, 38) of the one and the other of the two clutches (4, 5).

6. Wet dual clutch (1) according to Claim 5, in which the two clutches (4, 5) are positioned radially one inside the other.

7. Wet dual clutch (1) according to Claim 6, in which the canal (55) for the passage of the cooling fluid exhibits the outlet orifice (57) opening radially to the inside of the two clutches (4, 5).

8. Wet dual clutch (1) according to any one of Claims 5 to 7, in which the input disc carrier (8, 9) and the output disc carrier (15, 30) of each of the clutches (4, 5) comprise radial orifices (58) distributed circumferentially about the axis X and intended to allow the cooling fluid to circulate radially towards the outside through the multidisc assembly (10, 11) of each of the clutches (4, 5) from the canal (55) for the passage of the cooling fluid.

9. Wet dual clutch (1) according to any one of Claims 5 to 8, in which the input disc carriers (8, 9) of the two clutches (4, 5) are fixed to one another and mounted to rotate about the axis X on the internal tube (42) of the hydraulic control system (21) via a bearing (20) .

10. Wet dual clutch (1) according to Claim 9, in which each input or output disc carrier (8, 9, 15, 30) comprises a cylindrical skirt (18, 22, 29, 34); each friction disc or plate being mounted with the ability to move axially on the cylindrical skirt of one of the output or input disc carriers and so as to rotate as one therewith, and in which one of the input disc carriers (8, 9) comprises a support portion (19) directed radially towards the inside from an edge of its cylindrical skirt (18); the said support portion (19) exhibiting a shoulder (53) collaborating with the bearing (20).

11. Wet dual clutch (1) according to Claim 10, in which the multidisc assembly (10) of one of the clutches (4) is positioned radially on the inside of the multidisc assembly (11) of the other clutch (5), in which the bearing (20) is positioned radially on the inside of the multidisc assemblies (10, 11) of the clutches (4, 5), and in which the support portion (19) exhibits an internal zone (19b) which is bent over in an opposite direction to the hydraulic control system (21), inside the multidisc assemblies.

12. Wet dual clutch (1) according to Claim 11, in which the canal (55) for the passage of a cooling fluid exhibits the outlet orifice (57) which is formed in a portion of the internal tube (42) which is positioned axially between the bearing (20) which supports the input disc carriers (8, 9) of the two clutches (4, 5), and the two annular chambers of the hydraulic control system (21); the internal zone (19b) of the support portion (19) comprising orifices (59) distributed circumferentially about the axis X and intended to allow circulation of the cooling fluid.

13. Wet dual clutch (1) according to any one of Claims 9 to 11, in which the canal (55) for the passage of a cooling fluid exhibits the outlet orifice (57) which is formed in a portion of the internal tube extending axially beyond the bearing (20) which supports the input disc carriers (8, 9) of the two clutches (4, 5).

14. Wet dual clutch (1) according to any one of Claims 5 to 13, in which the canal (55) for the passage of a cooling fluid exhibits the outlet orifice (57) opening in a plane perpendicular to the axis X, the said plane being secant to one of the cylindrical skirts (22, 34) of the output disc carriers (15, 30).

15. Motor vehicle comprising a wet dual clutch (1) according to any one of Claims 5 to 14.
